# FASCICULE DE BREVET EUROPEEN

(11) **EP 3 631 222 B1**
(45) Date de publication et mention de la délivrance du brevet: **21.02.2024**
(21) Numéro de dépôt: 18724908.1
(22) Date de dépôt: 23.05.2018
(51) Int. Cl.: F16C 35/067, F16B 21/10, B60S 1/08, B60S 1/16, F16H 1/16, F16C 19/06, H02K 5/173, H02K 7/08, H02K 7/116

(54) **MOTO-REDUCTEUR POUR SYSTEME D'ESSUYAGE DE VEHICULE AUTOMOBILE**
GETRIEBEMOTOR FÜR EIN SCHEIBENWISCHERSYSTEM EINES KRAFTFAHRZEUGS
GEAR MOTOR FOR A MOTOR VEHICLE WIPER SYSTEM

(30) Priorité: 02.06.2017 FR 1754894
(43) Date de publication de la demande: 08.04.2020
(73) Titulaire: Valeo Systèmes d'Essuyage, 78322 Le Mesnil Saint Denis (FR)
(72) Inventeur: HERRADA, Jose-Luis, 78322 Le Mesnil Saint Denis (FR)
(74) Mandataire: Valeo Visibility
(86) Numéro de dépôt international: PCT/EP2018/063535
(87) Numéro de publication internationale: WO 2018/219742

(56) Documents cités:
- EP-A1- 2 216 559
- EP-A1- 2 805 872
- EP-A1- 3 403 903
- EP-A2- 1 447 305
- WO-A2-2010/129404
- US-A- 5 027 024
- US-B1- 7 034 421

## Description

L'invention est relative à un moto-réducteur pour système d'essuyage de véhicule automobile.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balai qui présentent de nombreux avantages comme une grande durée de vie, un encombrement et une consommation réduits ainsi qu'un faible niveau sonore.

Un tel moto-réducteur trouve une application particulière dans un système d'essuyage de véhicule automobile comprenant un ou plusieurs balais d'essuyage, un mécanisme d'embiellage pour l'entrainement du ou des balais d'essuyage selon un mouvement de va et vient, ledit arbre de sortie du moto-réducteur entrainant le mécanisme d'embiellage du système d'essuyage.

Le mécanisme réducteur est un couple vis sans fin /roue dentée, la vis sans fin étant solidaire de l'arbre de rotation du rotor, la roue dentée solidaire de l'arbre de sortie du moto-réducteur.

Des roulements à billes, typiquement au nombre de deux ou trois sont utilisés pour guider en rotation l'arbre de rotation, chaque roulement à billes comportant une bague intérieure et une bague extérieure, et des billes apte à rouler sur un chemin de la bague intérieure et sur un chemin de la bague extérieure.

Parmi les exigences du cahier des charges des constructeurs à atteindre, il est typiquement requis une précision sur la position angulaire de l'arbre de sortie qui implique de supprimer le jeu axial entre l'arbre de rotation du rotor et son support, et dans le but de bloquer la position axiale de la vis sans fin suivant l'axe de l'arbre de rotation du rotor.

Pour ce faire, on bloque tout d'abord la position axiale de la bague intérieure du roulement à billes sur l'arbre de rotation (dans les deux sens), puis on bloque la position axiale de la bague extérieure dudit roulement par rapport au support fixe, à savoir au carter du moto-réducteur.

L'état de la technique connait de la littérature brevet des dispositifs pour la génération d'un effort axial configuré pour compenser le jeu axial de l'arbre de rotation et, et parmi ceux-ci des dispositifs comportant une cale de retenue (en anglais « *wedge* »), de pose aisée en ce qu'elle est mise en place aisément par coulissement de la cale de retenue à cheval sur l'arbre de rotation, suivant une direction de pose radiale à l'arbre : les documents EP1050099, US7898132, JP5317751, JP2013203184, EP1447305A2 ou EP2805872A1 en sont des exemples.

Dans toutes ces antériorités, le dispositif pour la génération d'un effort axial bloque le jeu axial du roulement guidant l'arbre de rotation, situé dans une position intermédiaire entre la vis-sans fin et le rotor du moteur électrique.

Le roulement à billes est ainsi maintenu dans un support de palier comportant un siège solidaire du carter du mécanisme réducteur, le siège comportant une face d'appui sur la tranche de la bague extérieure du roulement, tournée de sens opposé à la position de la vis sans fin. La cale de retenue est un élément monté par coulissement suivant une direction radiale à l'arbre.

Lors du montage, le roulement à billes est pré-positionné sur l'arbre de rotation, la bague intérieure du roulement à billes préalablement bloquée en position sur l'arbre de rotation. On enfile ensuite par l'extérieur l'ensemble arbre de rotation/ roulement à billes au travers d'une ouverture du siège, de manière à faire pénétrer la vis à bille dans le carter du mécanisme réducteur, et simultanément à positionner la bague extérieure du roulement en appui sur la face d'appui du siège. La suppression du jeu axial est obtenue après insertion de la cale de retenue, suivant sa direction de coulissement, radialement à l'arbre de rotation, en faisant coulisser la cale de retenue dans des guides du carter.

Une fois en position de blocage, la cale de retenue exerce un effort axial sur le roulement à billes, ledit effort étant dirigé vers le siège support de palier, la bague extérieure du roulement étant bloquée par la cale de retenue, d'une part, vers le côté de la vis sans fin, et bloquée par la face d'appui du siège vers le côté opposé à la vis sans fin, et par référence à la position du roulement : l'effort axial de la cale de retenue sur la bague extérieure du roulement à billes est ainsi toujours de sens dirigé vers la vis sans fin.

Selon les constatations de l'inventeur, la présence d'un tel dispositif pour la génération d'un effort axial reposant sur le blocage du roulement à billes disposé intermédiaire entre la vis sans fin et le moteur électrique peut être pénalisant lorsque l'on recherche à limiter l'encombrement axial du moteur électrique.

La présente invention a pour but de pallier les inconvénients précités en proposant un moto-réducteur pour système d'essuyage de véhicule automobile dont le guidage de l'arbre du moteur permet d'obtenir une bonne compacité selon l'axe longitudinal de l'arbre de rotation, et sans sacrifier la compensation du jeu axial de l'arbre de rotation.

D'autres buts et avantages de l'invention apparaitront au cours de la description qui va suivre qui n'est donnée qu'à titre indicatif et qui n'a pas pour but de la limiter.

Aussi l'invention concerne tout d'abord un moto-réducteur pour système d'essuyage de véhicule automobile comprenant :
- un moteur électrique comportant :
   - un rotor comprenant des éléments magnétiques,
   - un stator présentant des bobines d'excitation électromagnétique du rotor,
   - un arbre de rotation solidaire du rotor,
- un mécanisme réducteur reliant l'arbre de rotation et un arbre de sortie du moto-réducteur,
- un carter formant une enveloppe de protection ledit mécanisme réducteur, voire éventuellement ledit moteur électrique,
   et dans lequel ledit mécanisme réducteur comprend un système vis sans fin /roue dentée, la vis sans fin étant solidaire de l'arbre de rotation du rotor, la roue dentée solidaire de l'arbre de sortie du moto-réducteur,
- un support de palier solidaire du carter recevant un roulement à billes configuré pour le guidage de l'arbre de rotation, ledit roulement à billes comprenant une bague intérieure montée sur l'arbre de rotation, et une bague extérieure, le support de palier comportant un siège pour la réception et le support de la bague extérieure du roulement à billes qui comporte une face d'appui pour la bague extérieure du roulement à billes,
- un dispositif pour la génération d'un effort axial configuré pour compenser le jeu axial de l'arbre de rotation, comportant une cale de retenue, montée en coulissement selon une direction radiale audit arbre de rotation, ladite cale de retenue exerçant un effort axial sur la bague extérieure du roulement à billes, ledit effort étant dirigé vers la face d'appui du siège du support de palier.

Selon l'invention, ladite cale de retenue est disposée dans une position intermédiaire entre le siège du support de palier et la vis sans fin, à proximité immédiate de la roue dentée, ledit effort axial exercé par la cale de retenue sur la bague extérieure du roulement à billes étant de sens dirigé vers le sens opposé à la vis sans fin.

Avantageusement, ledit roulement à billes maintenu entre le siège du support de palier et la cale de retenue peut être celui guidant l'extrémité de l'arbre de rotation du côté opposé au moteur électrique, par référence à la vis sans fin, à savoir l'extrémité de l'arbre de rotation la plus éloignée du moteur électrique.

La cale de retenue peut être située à une distance inférieure à 3 mm de la denture de la roue dentée, tel que par exemple 2mm.

Selon l'invention, la cale de retenue comprend :
- une paroi frontale portant une échancrure traversée par l'arbre de rotation, présentant une face externe dirigée vers la vis sans fin, et une face interne en appui sur la bague extérieure du roulement à billes, transmettant ledit effort axial sur la bague extérieure du roulement à billes,
- deux ailes de montage, positionnées de part et d'autre de l'échancrure, destinées à engager au coulissement respectivement dans deux rainures de montage parallèles dudit support de palier.

Afin de rapprocher le roulement à billes de la roue dentée, selon l'invention, le moto-réducteur présente les dispositions suivantes :
- ladite aile de montage disposée du côté de la roue dentée par référence à l'échancrure, dite première aile de montage, est éloignée de la roue dentée par un décalage de position suivant la direction axiale de l'arbre de rotation, et par référence à la position axiale de la paroi frontale : dans ce cas la paroi frontale et ladite première aile de montage décalée axialement de la paroi frontale peut être reliées par un coude de la cale de retenue ;
- ledit coude peut présenter une échancrure à hauteur et à proximité immédiate de la denture de la roue dentée.

Selon des caractéristiques optionnelles de l'invention, prises seules ou en combinaison :
- l'autre aile de montage disposée de l'autre côté de l'échancrure, dite seconde aile de montage, est de position axiale différente de la première aile de montage suivant l'axe de l'arbre de rotation, dans une position axialement rapprochée de la roue dentée par comparaison à la première aile de montage :par exemple la position axiale de la seconde aile de montage suivant l'axe de l'arbre de rotation est identique à la position de la paroi frontale ;
- l'échancrure de la paroi frontale traversée par l'arbre de rotation débouchant vers le bas de la cale de retenue, un couvercle s'étendant en saillie de la paroi frontale sur le haut de la cale de retenue et de manière à couvrir le roulement à billes et/ou ledit support de palier ;
- le support de palier comprend un logement formant le siège pour la bague extérieure du roulement à billes , le logement présentant une ouverture d'insertion du roulement à billes tournée vers la vis sans fin, une paroi interne cylindrique coopérant avec la surface cylindrique de la bague extérieure du roulement à billes, ainsi qu'un épaulement de fond, en appui sur la tranche de la bague extérieure du roulement à billes située opposée à celle sur laquelle appuie la cale de retenue ;
- le corps du support de palier dans lequel est formé le logement comprend une face frontale dans laquelle est formée l'ouverture d'insertion, la rainure de montage engageant avec ladite première aile de montage étant de position décalée axialement par référence à la face frontale, créant un dégagement latéral au corps ;
- l'épaisseur ep de la zone de plus petite épaisseur de paroi du corps du support de palier définie entre la paroi interne cylindrique du logement et la face latérale extérieure du corps du côté de la roue dentée est inférieure à 5 mm, notamment inférieure à 3 mm ;
- ledit arbre de rotation est guidé uniquement par deux roulements à billes, y compris ledit roulement à billes maintenu entre le support de palier et la cale de retenue pour le guidage de l'extrémité de l'arbre de rotation située du côté opposé au moteur électrique par référence à la vis sans fin, ainsi qu'un deuxième roulement pour le guidage de l'autre extrémité de l'arbre de rotation située côté moteur électrique.

Avantageusement et selon un mode de réalisation, la distance séparant le roulement à billes et la périphérie de la roue dentée peut être inférieure à 10 mm, de préférence inférieure à 8 mm, et plus préférentiellement inférieure à 6 mm, et encore plus préférentiellement inférieure à 4 mm.

L'invention sera mieux comprise à la lecture de la description suivante accompagnée des dessins en annexe parmi lesquels :

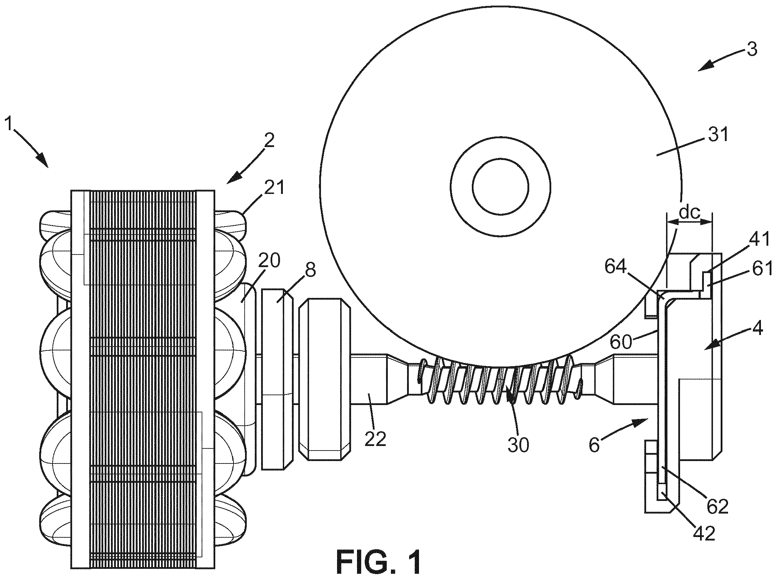

- La figure 1 est une vue partielle de dessus (carter non illustré) d'un moto-réducteur conforme à l'invention selon un mode de réalisation, illustrant plus particulièrement la position de la cale de retenue à proximité immédiate de la denture de la roue dentée,

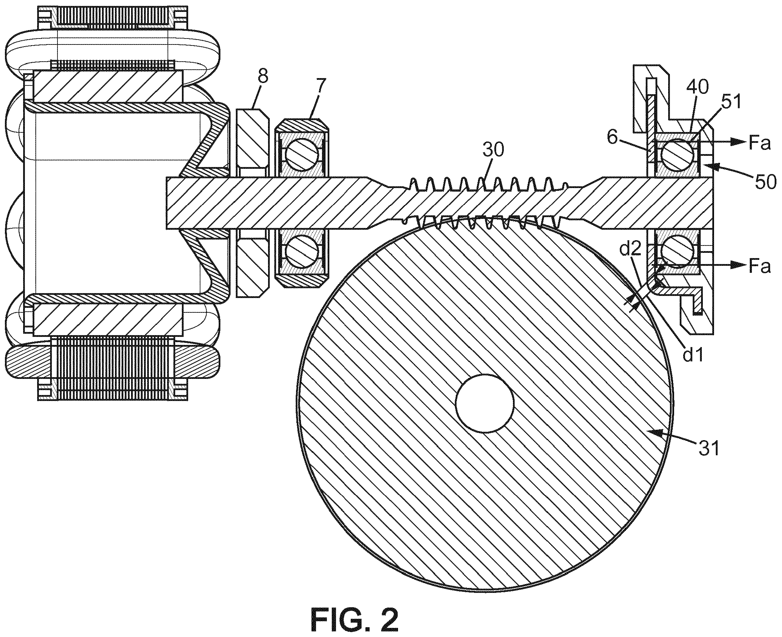

- La figure 2 est une vue de coupe de la figure 1, selon un plan de coupe parallèle à la roue dentée et passant par l'axe de l'arbre de rotation, illustrant plus particulièrement le sens de l'effort axial appliqué par la cale de retenue sur la bague extérieure du roulement à billes qui est dirigé de sens opposé à la vis sans fin, la distance repérée d1 séparant la cale de retenue à la périphérie de la roue dentée, ainsi que la distance repérée d2 que l'invention cherche à minimiser, à savoir la distance séparant le roulement à billes et la périphérie de la roue dentée,

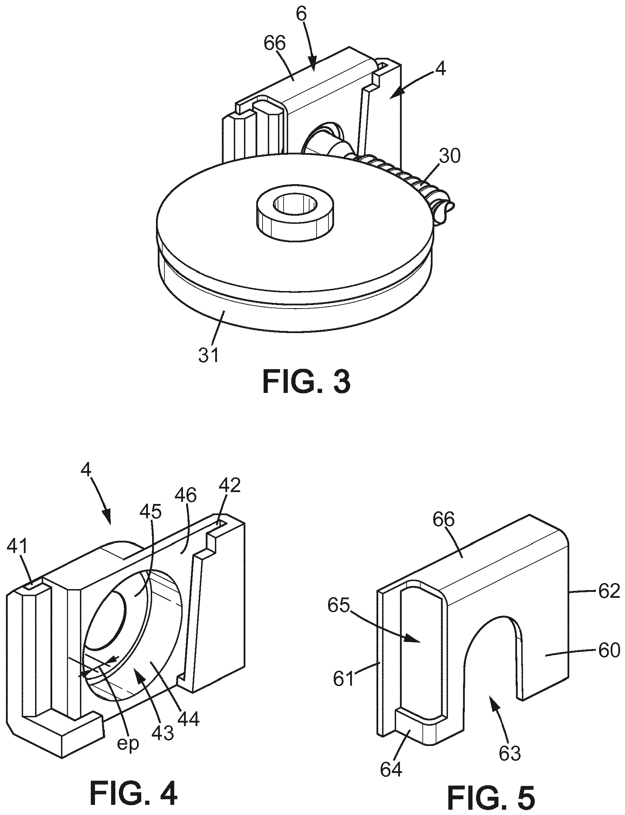

- La figure 3 est une vue en perspective (partielle) d'un moto-réducteur conforme à l'invention et qui se distingue de manière notable de celui de la figure 1 en ce que la cale de retenue présente avantageusement une échancrure au niveau d'un coude entre la paroi frontale de la cale et une aile de montage, côté roue dentée, et de manière à pouvoir positionner le roulement à billes encore plus près de la roue dentée, et par comparaison au mode de réalisation de la figure 1,
- Les Figures 4 et 5 sont des vues de détails de la cale de retenue et du support de palier du moto-réducteur de la figure 3.

Aussi l'invention est relative à un moto-réducteur 1 pour système d'essuyage de véhicule automobile comprenant :
- un moteur électrique 2 comportant :
   - un rotor 20 comprenant des éléments magnétiques,
   - un stator 21 présentant des bobines d'excitation électromagnétique du rotor,
   - un arbre de rotation 22 solidaire du rotor,
- un mécanisme réducteur 3 reliant l'arbre de rotation 22 et un arbre de sortie du moto-réducteur,
- un carter formant une enveloppe de protection pour le mécanisme réducteur 3, voire éventuellement ledit moteur électrique 2.

Le moteur électrique 2 peut à courant continu avec balais, ou alternativement à courant continu sans balais. Dans ce dernier cas (à savoir moteur sans balai), un tel moto-réducteur comprend un dispositif de détermination de la position angulaire du rotor 20 par rapport au stator 21. Une unité de commande (non illustrée) est configurée pour générer des signaux de commande pour alimenter les bobines d'excitation électromagnétique du stator 21 en fonction de la position angulaire du rotor déterminée par le dispositif de détermination de la position angulaire du rotor.

Selon un mode de réalisation, le dispositif de détermination de la position angulaire du rotor peut comprendre un aimant multipolaire solidaire en rotation du rotor, et un ou plusieurs capteurs à effet Hall (non illustrés) en des positions fixes, aptes à détecter les changements de domaines magnétiques de l'aimant multipolaire lors de la rotation du rotor.

Le mécanisme réducteur 3 comprend un système vis sans fin /roue dentée, la vis sans fin 30 étant solidaire de l'arbre de rotation du rotor 22, la roue dentée 31 solidaire de l'arbre de sortie du moto-réducteur. La vis sans fin peut être constituée par un filet de vis d'un seul tenant avec la matière de l'arbre.

Le moto-réducteur comprend un support de palier 4 solidaire du carter recevant un roulement à billes 5 configuré pour le guidage de l'arbre de rotation 22. Le support de palier 4 est notamment prévu d'un seul tenant avec l'enveloppe formant le carter du moto-réducteur.

Le roulement à billes 5 comprend une bague intérieure 50 montée sur l'arbre de rotation 22, et une bague extérieure 51. La bague intérieure 50 et la bague extérieure 51 forment entre elles un logement annulaire pour les billes du roulement, les bagues intérieure et extérieure présentant respectivement des chemins de roulement pour les billes. Le blocage axial (dans les deux sens) de la bague intérieure sur l'arbre de rotation 22 est assuré par tout moyen connu de l'homme du métier tel que par exemple par frettage, un anneau élastique (type circlip ^{®} ou autres).

Le support de palier 4 comportant un siège 40 pour la réception et le support de la bague extérieure 51 du roulement à billes 5 qui comporte une face d'appui pour la bague extérieure 51 du roulement à billes.

Selon l'invention, le moto-réducteur 1 présente un dispositif pour la génération d'un effort axial configuré pour compenser le jeu axial de l'arbre de rotation 22 et qui comporte une cale de retenue 6. Cette cale de retenue est montée en coulissement selon une direction radiale audit arbre de rotation 22 pour permettre son retrait, ou inversement sa mise en place dans des guides fixe du carter. Dans sa position de montage, la cale de retenue 6 exerce un effort axial sur la bague extérieure 51 du roulement à billes 5, ledit effort axial étant dirigé vers la face d'appui du siège 40 du support de palier 4. On obtient ainsi le blocage axial de la bague extérieure 51 du roulement à billes, dans les deux sens, ladite bague extérieure étant prise entre la cale de retenue 6 et la face d'appui du siège 40 du support de palier 4, de part et d'autre du roulement à billes5.

Selon une caractéristique de l'invention, ladite cale de retenue 6 est disposée dans une position intermédiaire entre le siège 40 du support de palier 4 et la vis sans fin 30, à proximité immédiate de la roue dentée 31.

Ainsi, et comme illustré selon l'exemple de la figure 2, ledit effort axial Fa exercé par la cale de retenue 6 sur la bague extérieure 51 du roulement à billes 5 est de sens dirigé vers le sens opposé à la vis sans fin 30 (et non de sens dirigé vers la vis sans fin comme dans l'état de la technique précité, notamment constitué par le document EP1050099).

La cale de retenue 6 peut être située à une distance d1 de la denture de la roue dentée 31 inférieure ou égale à 5 mm, de préférence inférieure à 3 mm, tel que par exemple inférieure ou égale à 2 mm.

La cale de retenue 6 coopère avec ledit support de palier 4 pour maintenir le roulement à billes 5 assurant le guidage de l'extrémité de l'arbre de rotation 22, et avantageusement situé du côté opposé au moteur électrique 2, par référence à la vis sans fin 30, à savoir l'extrémité de l'arbre de rotation 22 la plus éloignée du moteur électrique 2.

Selon un mode de réalisation avantageux permettant de limiter la longueur de l'arbre de rotation, ledit arbre de rotation 22 est guidé uniquement par deux roulements à billes 5,7, y compris ledit roulement à billes 5 maintenu entre le support de palier 4 et la cale de retenue 6 pour le guidage de l'extrémité de l'arbre de rotation 22 située du côté opposé au moteur électrique par référence à la vis sans fin 30, ainsi qu'un deuxième roulement 7 pour le guidage de l'autre extrémité de l'arbre de rotation 22 située côté moteur électrique 2, par référence à la vis sans fin 30.

Selon l'invention, la cale de retenue 6 comprend une paroi frontale 60 portant une échancrure 63 traversée par l'arbre de rotation 22 (dans la position de montage de la cale). Cette paroi frontale 60 présente une face externe dirigée vers la vis sans fin 30, et une face interne en appui sur la bague extérieure 51 du roulement à billes 5. La face interne appuie sur la bague extérieure 51 du roulement et transmet ledit effort axial Fa sur la bague extérieure 51 du roulement à billes 5.

La cale de retenue 6 encore comprend deux ailes de montage 61, 62, respectivement positionnées de part et d'autre de l'échancrure 63, destinées à engager au coulissement respectivement dans les deux guides fixes tels que deux rainures 41, 42 de montage, parallèles dudit support de palier 4.

Selon l'invention, ladite aile de montage 61 disposée du côté de la roue dentée 31 par référence à l'échancrure 63, dite première aile de montage, est avantageusement éloignée de la roue dentée 31 grâce à un décalage de position (repéré de à la figure 1) suivant la direction axiale de l'arbre de rotation 22, et par référence à la position axiale de la paroi frontale 60. Cette position décalée de l'aile de montage 61 permet avantageusement de rapprocher le roulement à billes 5 au plus près de la roue dentée 31, et ainsi de réduire la longueur de l'arbre de rotation 22 et par comparaison à une solution (non illustrée) où l'aile de montage se serait disposée dans le plan de la paroi frontale 60 de la cale de retenue 6.

On remarque ainsi que la paroi frontale 60 et ladite première aile de montage 61 décalée axialement de la paroi frontale 60 peuvent être reliées par un coude 64 de la cale de retenue 6. Comme illustré à titre indicatif aux figures 3 et 4, on remarque encore que ledit coude 64 peut présenter une échancrure 65 à hauteur et à proximité immédiate de la denture de la roue dentée 31, et dans le but de rapprocher plus encore le roulement à billes 5 de la roue dentée 31.

L'autre aile de montage disposée de l'autre côté de l'échancrure 63 par rapport à la première aile de montage est appelée seconde aile de montage 62: cette seconde aile de montage 62 est de position axiale différente de la première aile de montage 61 suivant l'axe de l'arbre de rotation, et en particulier dans une position axialement rapprochée de la roue dentée 31 (par comparaison à la première aile de montage 61) en ce qu'elle ne constitue pas nécessairement un obstacle au rapprochement du roulement à billes 5. Par exemple, la position axiale de la seconde aile de montage 62 suivant l'axe de l'arbre de rotation 22 est identique à la position de la paroi frontale 60, ladite seconde aile de montage 62 étant alors située dans le prolongement de la paroi frontale 60.

L'échancrure 63 de la paroi frontale 60 traversée par l'arbre de rotation 22 débouche vers le bas de la cale de retenue, un couvercle 66 pouvant s'étendre en saillie de la paroi frontale 60 sur le haut de la cale de retenue 6. Une fois en position de montage, ce couvercle 66 de la cale de retenue 6 vient couvrir le roulement à billes 5 et/ou ledit support de palier 4.

Le support de palier 4 comprend un logement formant le siège 40 pour la bague extérieure 51 du roulement à billes 5. Le logement présente une ouverture d'insertion 43 du roulement à billes tournée vers la vis sans fin 30, une paroi interne cylindrique 44 coopérant avec la surface la surface cylindrique de la bague extérieure 51 du roulement à billes 5, ainsi ainsi qu'un épaulement de fond 45. L'épaulement de fond 45 forme la face (i.e. la face d'appui) du siège qui appuie sur la tranche de la bague extérieure 51 du roulement à billes 5 située opposée à celle sur laquelle appuie la cale de retenue 6.

Le corps du support de palier 4 dans lequel est formé le logement comprend une face frontale 46 dirigé vers la vis sans fin et dans laquelle est pratiquée l'ouverture d'insertion 43 permettant la mise en place du roulement à billes 5. La rainure 41 de montage du support engageant avec ladite première aile de montage 61 est éloignée de la roue dentée, à savoir de position décalée axialement par référence à la face frontale 46. Ce décalage crée un dégagement latéral au corps permettant le rapprochement du corps du support de palier 4 au plus près de la roue dentée 31. A cet effet, l'épaisseur ep de la zone de plus petite épaisseur ep de paroi du corps du support de palier 4 définie entre la paroi interne cylindrique 44 du logement et la face latérale extérieure du corps (du côté de la roue dentée 31) peut être réduite, inférieure à 5 mm, notamment inférieure ou égale à 3 mm. La distance d2 séparant le roulement à billes 5 et la périphérie de la roue dentée 31 peut être avantageusement réduite, par exemple inférieure à 10 mm, notamment inférieure à 8 mm, et plus préférentiellement inférieure à 6 mm, voire inférieure à 4 mm.

### NOMENCLATURE

1. Moto-réducteur,
2. Moteur électrique,
20. Rotor,
21. Stator,
22. Arbre de rotation,
3. Mécanisme réducteur,
30. Vis sans fin,
31. Roue dentée,
4. Support de palier,
40. Siège,
41, 42. Rainures de montage,
43. Ouverture d'insertion du roulement à billes,
44. Paroi interne cylindrique,
45. Epaulement de fond,
46. Face frontale
5. Roulement à billes (Premier roulement),
50, 51. Respectivement bague intérieure et bague extérieure,
6. Cale de retenue,
60. Paroi frontale,
61,62. Ailes de montages,
63. Echancrure de la paroi frontale traversée par l'arbre de rotation,
64. Coude,
65. Echancrure (coude),
66. Couvercle,
7. Deuxième roulement,
8. Aimant multipolaire,
d1. Distance entre la roue denrée et la cale de retenue,
d2. Distance séparant la roue dentée et le roulement à billes,
ep. Epaisseur de la zone de plus petite épaisseur de paroi du corps du support de palier définie entre la paroi interne du logement et la face latérale extérieur du corps du côté de la roue dentée.
Fa. Effort axial exercé par la cale de retenue sur le roulement à billes,

## Revendications

1. Moto-réducteur (1) pour système d'essuyage de véhicule automobile comprenant :
- un moteur électrique (2) comportant :
- un rotor (20) comprenant des éléments magnétiques,
- un stator (21) présentant des bobines d'excitation électromagnétique du rotor,
- un arbre de rotation (22) solidaire du rotor,
- un mécanisme réducteur (3) reliant l'arbre de rotation (22) et un arbre de sortie du moto-réducteur,
- un carter formant une enveloppe de protection pour le mécanisme réducteur (3),
et dans lequel ledit mécanisme réducteur (3) comprend un système vis sans fin /roue dentée, la roue dentée (31) étant solidaire de l'arbre de sortie du moto-réducteur,
- un support de palier (4) solidaire du carter recevant un roulement à billes (5) configuré pour le guidage de l'arbre de rotation (22), ledit roulement à billes (5) comprenant une bague intérieure (50) montée sur l'arbre de rotation, et une bague extérieure (51), le support de palier (4) comportant un siège (40) pour la réception et le support de la bague extérieure (51) du roulement à billes (5) qui comporte une face d'appui pour la bague extérieure du roulement à billes,
**caractérisé en ce que**
- la vis sans fin (22) est solidaire de l'arbre de rotation du rotor (22),
- le moto-réducteur comprend un dispositif pour la génération d'un effort axial configuré pour compenser le jeu axial de l'arbre de rotation (22), comportant une cale de retenue (6), montée en coulissement selon une direction radiale audit arbre de rotation (22), ladite cale de retenue (6) exerçant un effort axial sur la bague extérieure du roulement à billes (5), ledit effort étant dirigé vers la face d'appui du siège (40) du support de palier (4), ladite cale de retenue (6) comportant :
- une paroi frontale (60) portant une échancrure (63) traversée par l'arbre de rotation (22), présentant une face externe dirigée vers la vis sans fin (30), et une face interne en appui sur la bague extérieure (51) du roulement à billes (5), transmettant ledit effort axial (Fa) sur la bague extérieure (51) du roulement à billes (5),
- deux ailes de montage (61, 62), positionnées de part et d'autre de l'échancrure (63), destinées à engager au coulissement respectivement dans deux rainures (41, 42) de montage parallèles dudit support de palier (4),
ladite cale de retenue (6) étant disposée dans une position intermédiaire entre le siège (40) du support de palier (4) et la vis sans fin (30), à proximité immédiate de la roue dentée (31), ledit effort axial (Fa) exercé par la cale de retenue (6) sur la bague extérieure (51) du roulement à billes (5) étant de sens dirigé vers le sens opposé à la vis sans fin (30),
ladite aile de montage (61) disposée du côté de la roue dentée (31) par référence à l'échancrure (63), dite première aile de montage, est éloignée de la roue dentée (31) par un décalage (dc) de position suivant la direction axiale de l'arbre de rotation (22), et par référence à la position axiale de la paroi frontale (60).

2. Moto-réducteur selon la revendication 1, dans lequel la cale de retenue (6) est située à une distance (d1) inférieure à 3 mm de la denture de la roue dentée (31).

3. Moto-réducteur (1) selon l'une des revendications précédentes, dans lequel la paroi frontale (60) et ladite première aile de montage (61) décalée axialement de la paroi frontale (60) sont reliées par un coude (64) de la cale de retenue (6).

4. Moto-réducteur selon la revendication 3, dans lequel ledit coude (64) présente une échancrure (65) à hauteur et à proximité immédiate de la denture de la roue dentée (31).

5. Moto-réducteur selon l'une des revendications précédentes dans lequel ladite première aile de montage (61) disposée du côté de la roue dentée (31) par référence à l'échancrure (63) de la paroi frontale (60) étant éloignée de la roue dentée (31) par ledit décalage (dc) de position suivant la direction axiale de l'arbre de rotation (22) et dans lequel l'autre aile de montage (62) disposée de l'autre côté de l'échancrure (63), dite seconde aile de montage, est de position axiale différente de la première aile de montage (61) suivant l'axe de l'arbre de rotation, dans une position axialement rapprochée de la roue dentée (31) par comparaison à la première aile de montage (61).

6. Moto-réducteur selon la revendication 5, dans lequel la position axiale de la seconde aile de montage (62) suivant l'axe de l'arbre de rotation (22) est identique à la position de la paroi frontale (60).

7. Moteur-réducteur selon l'une des revendications l'une des revendications précédentes, dans lequel l'échancrure (63) de la paroi frontale (60) traversée par l'arbre de rotation (22) débouche vers le bas de la cale de retenue, un couvercle (66) s'étendant en saillie de la paroi frontale sur le haut de la cale de retenue et de manière à couvrir le roulement à billes (5) et/ou ledit support de palier (4).

8. Moto-réducteur selon l'une des revendications précédentes, dans lequel le support de palier (4) comprend un logement formant le siège (40) pour la bague extérieure (51) du roulement à billes (5), le logement présentant une ouverture d'insertion (43) du roulement à billes tournée vers la vis sans fin (30), une paroi interne cylindrique (44) coopérant avec la surface cylindrique de la bague extérieure (51) du roulement à billes (5), ainsi qu'un épaulement de fond (45), en appui sur la tranche de la bague extérieure (51) du roulement à billes située opposée à celle sur laquelle appuie la cale de retenue (6).

9. Moto-réducteur selon l'une des revendications 1 à 6 pris en combinaison avec la revendication 8, dans lequel le corps du support de palier (4) dans lequel est formé le logement (40) comprend une face frontale (46) dans laquelle est formée l'ouverture d'insertion (43), la rainure (41) de montage engageant avec ladite première aile de montage (61) étant de position décalée axialement par référence à la face frontale (46), créant un dégagement latéral au corps.

10. Moto-réducteur selon la revendication 9, dans lequel l'épaisseur (ep) de la zone de plus petite épaisseur de paroi du corps du support de palier (4) définie entre la paroi interne cylindrique (44) du logement et la face latérale extérieure du corps du côté de la roue dentée (31) est inférieure à 5 mm, notamment inférieure à 3 mm.

11. Moto-réducteur (1) selon l'une des revendications 1 à 10, dans lequel ledit roulement à billes (5) maintenu entre le siège (40) du support de palier (4) et la cale de retenue (6) guide l'extrémité de l'arbre de rotation du côté opposé au moteur électrique (2), par référence à la vis sans fin (30).

12. Moteur réducteur selon l'une des revendications 1 à 11, dans lequel la distance (d2) séparant le roulement à billes (5) et la périphérie de la roue dentée (31) est inférieure à 10 mm, de préférence inférieure à 8 mm, et plus préférentiellement inférieure à 6 mm, et encore plus préférentiellement inférieure à 4 mm.

13. Moto-réducteur selon l'une des revendications précédentes, dans lequel ledit arbre de rotation (22) est guidé uniquement par deux roulements à billes (5,7), y compris ledit roulement à billes (5) maintenu entre le support de palier (4) et la cale de retenue (6) pour le guidage de l'extrémité de l'arbre de rotation (22) située du côté opposé au moteur électrique par référence à la vis sans fin (30), ainsi qu'un deuxième roulement (7) pour le guidage de l'autre extrémité de l'arbre de rotation située côté moteur électrique (2).

## Patentansprüche

1. Getriebemotor (1) für ein Scheibenwischersystem eines Kraftfahrzeugs, umfassend
- einen Elektromotor (2), welcher aufweist:
- einen Rotor (20), der magnetische Elemente umfasst,
- einen Stator (21), der Spulen zur elektromagnetischen Erregung des Rotors aufweist,
- eine Drehwelle (22), die fest mit dem Rotor verbunden ist,
- ein Untersetzungsgetriebe (3), das die Drehwelle (22) und eine Abtriebswelle des Getriebemotors verbindet,
- ein Gehäuse, das eine Schutzhülle für das Untersetzungsgetriebe (3) bildet,
und wobei das Untersetzungsgetriebe (3) ein Schnecke-Zahnrad-System umfasst, wobei das Zahnrad (31) fest mit der Abtriebswelle des Getriebemotors verbunden ist,
- eine mit dem Gehäuse fest verbundene Lagerstütze (4), die ein Kugellager (5) aufnimmt, das für die Führung der Drehwelle (22) ausgelegt ist, wobei das Kugellager (5) einen auf der Drehwelle angebrachten Innenring (50) und einen Außenring (51) umfasst, wobei die Lagerstütze (4) einen Sitz (40) zur Aufnahme und zur Abstützung des Außenringes (51) des Kugellagers (5) aufweist, der eine Anlagefläche für den Außenring des Kugellagers aufweist, **dadurch gekennzeichnet, dass**
- die Schnecke (22) fest mit der Drehwelle (22) des Rotors verbunden ist,
- der Getriebemotor eine Vorrichtung zur Erzeugung einer axialen Kraft umfasst, die dafür ausgelegt ist, das Axialspiel der Drehwelle (22) auszugleichen, und ein Haltestück (6) aufweist, das in einer radialen Richtung verschiebbar an der Drehwelle (22) angebracht ist, wobei das Haltestück (6) eine axiale Kraft auf den Außenring des Kugellagers (5) ausübt, wobei diese Kraft zur Anlagefläche des Sitzes (40) der Lagerstütze (4) hin gerichtet ist, wobei das Haltestück (6) aufweist:
- eine vordere Wand (60), die mit einem von der Drehwelle (22) durchquerten Ausschnitt (63) versehen ist und die eine der Schnecke (30) zugewandte Außenseite und eine am Außenring (51) des Kugellagers (5) anliegende Innenseite, welche die axiale Kraft (Fa) auf den Außenring (51) des Kugellagers (5) überträgt, aufweist,
- zwei Montageschenkel (61, 62), die beiderseits des Ausschnitts (63) positioniert sind und dazu bestimmt sind, jeweils in eine von zwei parallelen Montagenuten (41, 42) der Lagerstütze (4) gleitend einzugreifen,
wobei das Haltestück (6) in einer Zwischenposition zwischen dem Sitz (40) der Lagerstütze (4) und der Schnecke (30) angeordnet ist, in unmittelbarer Nähe des Zahnrades (31), wobei die axiale Kraft (Fa), die von dem Haltestück (6) auf den Außenring (51) des Kugellagers (5) ausgeübt wird, in die zur Schnecke (30) entgegengesetzte Richtung gerichtet ist,
wobei der Montageschenkel (61), der bezüglich des Ausschnitts (63) auf der Seite des Zahnrades (31) angeordnet ist, erster Montageschenkel genannt, von dem Zahnrad (31) in der axialen Richtung der Drehwelle (22) und bezüglich der axialen Position der vorderen Wand (60) durch einen Positionsversatz (dc) beabstandet ist.

2. Getriebemotor nach Anspruch 1, wobei sich das Haltestück (6) in einem Abstand (d1) von der Zahnung des Zahnrades (31) befindet, der kleiner als 3 mm ist.

3. Getriebemotor (1) nach einem der vorhergehenden Ansprüche, wobei die vordere Wand (60) und der erste Montageschenkel (61), der axial zur vorderen Wand (60) versetzt ist, durch ein Winkelstück (64) des Haltestücks (6) verbunden sind.

4. Getriebemotor nach Anspruch 3, wobei das Winkelstück (64) einen Ausschnitt (65) auf der Höhe und in unmittelbarer Nähe der Zahnung des Zahnrades (31) aufweist.

5. Getriebemotor nach einem der vorhergehenden Ansprüche, wobei der erste Montageschenkel (61), der bezüglich des Ausschnitts (63) der vorderen Wand (60) auf der Seite des Zahnrades (31) angeordnet ist, von dem Zahnrad (31) in der axialen Richtung der Drehwelle (22) durch den Positionsversatz (dc) beabstandet ist und wobei der andere Montageschenkel (62), der auf der anderen Seite des Ausschnitts (63) angeordnet ist, zweiter Montageschenkel genannt, sich in einer anderen axialen Position entlang der Achse der Drehwelle als der erste Montageschenkel (61) befindet, in einer Position, die im Vergleich zum ersten Montageschenkel (61) axial näher zum Zahnrad (31) ist.

6. Getriebemotor nach Anspruch 5, wobei die axiale Position des zweiten Montageschenkels (62) entlang der Achse der Drehwelle (22) mit der Position der vorderen Wand (60) identisch ist.

7. Getriebemotor nach einem der Ansprüche einem der vorhergehenden Ansprüche, wobei der Ausschnitt (63) der vorderen Wand (60), die von der Drehwelle (22) durchquert wird, auf der Unterseite des Haltestücks mündet, wobei sich eine Abdeckung (66) von der vorderen Wand vorstehend auf der Oberseite des Haltestücks erstreckt, und so, dass sie das Kugellager (5) und/oder die Lagerstütze (4) bedeckt.

8. Getriebemotor nach einem der vorhergehenden Ansprüche, wobei die Lagerstütze (4) eine Aufnahme umfasst, die den Sitz (40) für den Außenring (51) des Kugellagers (5) bildet, wobei die Aufnahme aufweist: eine Einsetzöffnung (43) für das Kugellager, die der Schnecke (30) zugewandt ist, eine zylindrische Innenwand (44), die mit der zylindrischen Fläche des Außenringes (51) des Kugellagers (5) zusammenwirkt, sowie einen Bodenansatz (45), der an dem Teilabschnitt des Außenringes (51) des Kugellagers anliegt, der sich gegenüber demjenigen befindet, an dem das Haltestück (6) anliegt.

9. Getriebemotor nach einem der Ansprüche 1 bis 6 in Kombination mit Anspruch 8, wobei der Körper der Lagerstütze (4), in der die Aufnahme (40) ausgebildet ist, eine Vorderfläche (46) umfasst, in der die Einsetzöffnung (43) ausgebildet ist, wobei die Montagenut (41), die mit dem ersten Montageschenkel (61) in Eingriff steht, sich in einer bezüglich der Vorderfläche (46) axial versetzten Position befindet, wodurch eine seitliche Aussparung an dem Körper erzeugt wird.

10. Getriebemotor nach Anspruch 9, wobei die Dicke (ep) des Bereichs kleinerer Wanddicke des Körpers der Lagerstütze (4), der zwischen der zylindrischen Innenwand (44) der Aufnahme und der seitlichen Außenfläche des Körpers auf der Seite des Zahnrades (31) definiert ist, kleiner als 5 mm ist, insbesondere kleiner als 3 mm.

11. Getriebemotor (1) nach einem der Ansprüche 1 bis 10, wobei das Kugellager (5), das zwischen dem Sitz (40) der Lagerstütze (4) und dem Haltestück (6) gehalten wird, das Ende der Drehwelle auf der Seite führt, die dem Elektromotor (2) bezüglich der Schnecke (30) gegenüberliegt.

12. Getriebemotor nach einem der Ansprüche 1 bis 11, wobei der Abstand (d2), der das Kugellager (5) und den Umfang des Zahnrades (31) trennt, kleiner als 10 mm ist, vorzugsweise kleiner als 8 mm, stärker bevorzugt kleiner als 6 mm und noch stärker bevorzugt kleiner als 4 mm.

13. Getriebemotor nach einem der vorhergehenden Ansprüche, wobei die Drehwelle (22) ausschließlich von zwei Kugellagern (5,7) geführt wird, nämlich dem Kugellager (5), das zwischen der Lagerstütze (4) und dem Haltestück (6) gehalten wird, zur Führung des Endes der Drehwelle (22), das sich auf der dem Elektromotor bezüglich der Schnecke (30) gegenüberliegenden Seite befindet, sowie einem zweiten Kugellager (7) zur Führung des anderen Endes der Drehwelle, das sich auf der Seite des Elektromotors (2) befindet.

## Claims

1. Gear motor (1) for a motor vehicle wiper system, including:
- an electric motor (2) including:
- a rotor (20) including magnetic elements,
- a stator (21) including windings for electromagnetic excitation of the rotor,
- a rotation shaft (22) fastened to the rotor,
- a reduction gear mechanism (3) connecting the rotation shaft (22) and an output shaft of the gear motor,
- a casing forming a protective envelope for the reduction gear mechanism (3),
and in which said reduction gear mechanism (3) includes a worm gear, the worm wheel (31) being fastened to the output shaft of the gear motor,
- a bearing support (4) fastened to the casing receiving a ball bearing (5) configured to guide the rotation shaft (22), said ball bearing (5) including an inner race (50) mounted on the rotation shaft and an outer race (51), the bearing support (4) including a seat (40) to receive and support the outer race (51) of the ball bearing (5) that includes a bearing face for the outer race of the ball bearing, **characterized in that**
- the worm (22) is fastened to the rotation shaft of the rotor (22),
- the gear motor comprises a device for generating an axial force configured to compensate the axial play of the rotation shaft (22), including a retaining wedge (6) mounted to slide in a radial direction relative to said rotation shaft (22), said retaining wedge (6) exerting an axial force on the outer race of the ball bearing (5), said force being directed toward the bearing face of the seat (40) of the bearing support (4), said retaining wedge (6) including:
- a front wall (60) with a notch (63) through which the rotation shaft (22) passes having an external face directed toward the worm (30) and an internal face bearing on the outer race (51) of the ball bearing (5), transmitting said axial force (Fa) to the outer race (51) of the ball bearing (5),
- two mounting flanges (61, 62) positioned on respective opposite sides of the notch (63) intended to be slidably engaged respectively in two parallel mounting grooves (41, 42) of said bearing support (4),
said retaining wedge (6) being disposed in an intermediate position between the seat (40) of the bearing support (4) and the worm (30) in the immediate vicinity of the worm wheel (31), said axial force (Fa) exerted by the retaining wedge (6) on the outer race (51) of the ball bearing (5) being directed away from the worm (30) ,
said mounting flange (61) disposed on the worm wheel (31) side relative to the notch (63), termed the first mounting flange, is spaced from the worm wheel (31) by a position offset (dc) in the axial direction of the rotation shaft (22) and relative to the axial position of the front wall (60).

2. Gear motor according to Claim 1, in which the retaining wedge (6) is situated at a distance (d1) less than 3 mm from the teeth of the worm wheel (31).

3. Gear motor (1) according to either one of the preceding claims, in which the front wall (60) and said first mounting flange (61) offset axially from the front wall (60) are connected by an elbow (64) of the retaining wedge (6).

4. Gear motor according to Claim 3, in which said elbow (64) includes a notch (65) at the height of and in the immediate vicinity of the teeth of the worm wheel (31).

5. Gear motor according to one of the preceding claims, in which said first mounting flange (61) disposed on the worm wheel (31) side of the notch (63) of the front wall (60) being spaced from the worm wheel (31) by said position offset (dc) in the axial direction of the rotation shaft (22) and in which the other mounting flange (62) disposed on the other side of the notch (63), termed the second mounting flange, is at a different axial position than the first mounting flange (61) along the axis of the rotation shaft, in a position axially closer to the worm wheel (31) compared to the first mounting flange (61).

6. Gear motor according to Claim 5, in which the axial position of the second mounting flange (62) along the axis of the rotation shaft (22) is identical to the position of the front wall (60).

7. Gear motor according to one of claims one of the preceding claims, in which the notch (63) of the front wall (60) through which the rotation shaft (22) passes opens toward the bottom of the retaining wedge, a cover (66) projecting from the front wall at the top of the retaining wedge and in such a manner as to cover the ball bearing (5) and/or said bearing support (4).

8. Gear motor according to one of the preceding claims, in which the bearing support (4) includes a housing forming the seat (40) for the outer race (51) of the ball bearing (5), the housing including a ball bearing insertion opening (43) facing toward the worm (30), a cylindrical internal wall (44) cooperating with the cylindrical surface of the outer race (51) of the ball bearing (5), and a back shoulder (45) bearing on the edge surface of the outer race (51) of the ball bearing situated opposite that on which the retaining wedge (6) bears.

9. Gear motor according to one of Claims 1 to 6 in combination with Claim 8, in which the body of the bearing support (4) in which the housing (40) is formed includes a front face (46) in which the insertion opening (43) is formed, the mounting groove (41) engaging with said first mounting flange (61) being in an axially offset position relative to the front face (46), creating a lateral offset in the body.

10. Gear motor according to Claim 9, in which the thickness (ep) of the thinnest zone of the wall of the body of the bearing support (4) defined between the cylindrical internal wall (44) of the housing and the exterior lateral face of the body on the worm wheel (31) side is less than 5 mm, in particular less than 3 mm.

11. Gear motor (1) according to one of Claims 1 to 10, in which said ball bearing (5) retained between the seat (40) of the bearing support (4) and the retaining wedge (6) guides the end of the rotation shaft at the end opposite the electric motor (2) relative to the worm (30) .

12. Gear motor according to one of Claims 1 to 11, in which the distance (d2) separating the ball bearing (5) and the periphery of the worm wheel (31) is less than 10 mm, preferably less than 8 mm, more preferably less than 6 mm, and even more preferably less than 4 mm.

13. Gear motor according to one of the preceding claims, in which said rotation shaft (22) is guided only by two ball bearings (5, 7), including said ball bearing (5) retained between the bearing support (4) and the retaining wedge (6) to guide the end of the rotation shaft (22) situated at the opposite end to the electric motor relative to the worm (30) and a second bearing (7) for guiding the other end of the rotation shaft situated at the electric motor (2) end.
